# EUROPÄISCHE PATENTANMELDUNG

(11) **EP 1 151 764 A2**
(43) Veröffentlichungstag der Anmeldung: **07.11.2001**
(21) Anmeldenummer: 01105963.1
(22) Anmeldetag: 09.03.2001
(51) Int. Cl.: A63B 71/06, A63B 69/00

(54) **Elektronisches System zur Anleitung von Trainierenden mit mobiler Datenerfassung**

(30) Priorität: 31.03.2000 DE 20006108 U
(71) Anmelder: Leonard, Thomas, Dr.-Ing., 58239 Schwerte (DE); Bremer, Udo, Dipl.-Ing, 59379 Selm (DE)
(72) Erfinder: Leonard, Thomas, Dr.-Ing., 58239 Schwerte (DE); Bremer, Udo, Dipl.-Ing, 59379 Selm (DE)

(57) **Zusammenfassung**

Die Erfindung betrifft ein elektronisches System zur Anleitung von einem oder mehreren Trainierenden und zur Erfassung ihrer Trainingsergebnisse mit Hilfe von mobilen Einheiten wie z.B. PDAs (Personal Digital Assistant) oder ähnlich einer Armbanduhr am Handgelenk getragenen Kleinstcomputern. Dabei werden von einer zentralen Datenverarbeitungsanlage Trainingsanweisungen an die mobilen Einheiten übertragen, welche von den Trainierenden ausgeführt werden. Die Trainingsergebnisse werden von den Trainierenden oder Trainern mit Hilfe der mobilen Einheiten erfasst und an die zentrale Datenverarbeitungsanlage übertragen und von dieser weiterverarbeitet.

## Beschreibung

Die Erfindung betrifft ein elektronisches System zur Anleitung von einem oder mehreren Trainierenden und zur Erfassung ihrer Trainingsergebnisse nach dem Oberbegriff des Schutzanspruchs 1.

Das Trainieren von körperlichen Fähigkeiten erfordert geeignete Übungen, die in bestimmten Abständen wiederholt werden müssen. Um einen optimalen Trainingseffekt zu erzielen, müssen die Übungen an den Leistungsstand des Trainierenden angepasst sein. Da sich bei erfolgreichem Training eine Leistungssteigerung einstellen wird, ist eine ständige Anpassung des Schwierigkeitsgrades der Übungen erforderlich, um auch weiterhin optimale Trainingserfolge zu erzielen.

Die Konzeption eines Trainingsplanes und die Bemessung der einzelnen Übungen hinsichtlich ihrer Art und ihres Schwierigkeitsgrades fällt prinzipiell in den Aufgabenbereich eines Trainers. Da gerade bei einem Training, das als Dienstleistung im Freizeitbereich angeboten wird, der Trainer mitunter eine Vielzahl von Trainierenden zu betreuen hat, ist eine individuelle und kontinuierliche Anpassung des Trainingsplanes an den Leistungsstand der Trainierenden nur schwer zu erreichen.

Zur Unterstützung des Trainers bei der Konzeption des Trainingsplanes kann prinzipiell eine Datenverarbeitungsanlage eingesetzt werden. Sinnvollerweise müssen dabei neben trainingsphysiologischen und trainingspsychologischen Gesichtspunkten auch die verfügbaren Trainingsdaten berücksichtigt werden.

Der in Schutzanspruch 1 angegebenen Erfindung liegt das Problem zu Grunde, eine Einrichtung zu schaffen, mit der für mindestens einen Trainierenden mindestens eine Übung hinsichtlich ihrer Art und ihrer Eigenschaften festgelegt und in Form eines Trainingsplanes dem Trainierenden verfügbar gemacht wird, wobei neben Vorgaben eines Trainers weitere Daten berücksichtigt werden können, die bei zurückliegenden Übungen anfielen.

Dieses Problem wird durch ein Gerät nach den Merkmalen des Schutzanspruchs 1 gelöst.

Mit der Erfindung wird erreicht, dass Trainingsanleitungen am Trainingsort verfügbar sind, sowie Trainingsdaten auf einfache Weise noch am Trainingsort erfasst und zentral in einer Datenverarbeitungsanlage ausgewertet werden können. Auf der Grundlage dieser Trainingsdaten wird unter Berücksichtigung trainingsphysiologischer und trainingspsychologischer Gesichtspunkte, sowie Vorgaben eines Trainers, automatisch ein Vorschlag für zukünftige Übungen erstellt. Auf diese Weise wird ein beaufsichtigender Trainer bei der Konzeption und der Anpassung des Trainings an den Leistungsstand der Trainierenden optimal unterstützt.

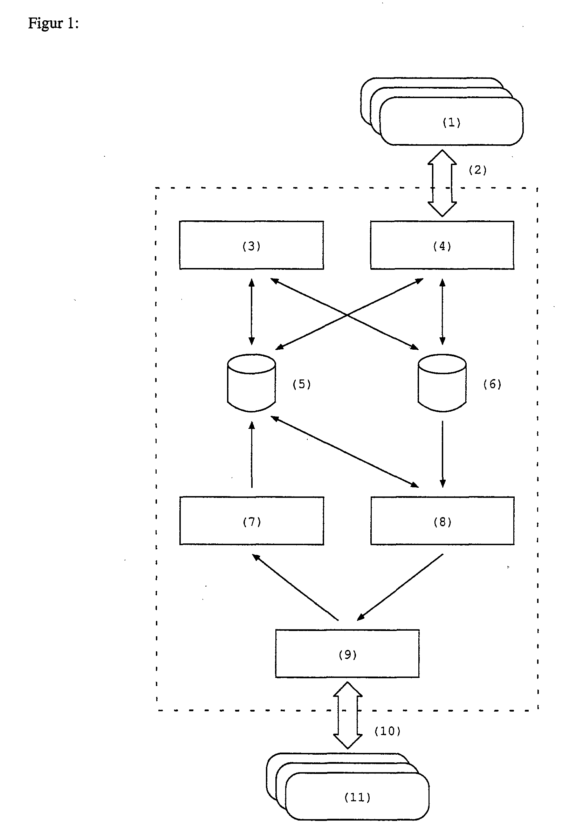

Vorteilhafte Ausgestaltungen der Erfindung sind in den Schutzansprüchen 2 und 3 angegeben und werden mit Hilfe von Figur 1 erläutert.

Die Weiterbildung nach Schutzanspruch 2 ermöglicht die Anzeige oder die graphische Darstellung auf einer ortsfesten Visualisierungs- und Eingabeeinrichtung (3) von in der Datenbank (5) abgespeicherten Trainingsdaten eines oder mehrerer Trainierender und der in Datenbank (6) abgespeicherten Trainingsvorgaben und Trainingsregeln, sowie deren manuelle Veränderung und Ergänzung durch einen Trainer.

Die Weiterbildung nach Schutzanspruch 3 ermöglicht die Anzeige sowie manuelle Veränderung und Ergänzung der abgespeicherten Trainingsdaten und der in Datenbank (6) abgespeicherten Trainingsvorgaben und Trainingsregeln durch einen Trainer unter Verwendung einer mobilen Einheit (1).

Ein Ausführungsbeispiel der Erfindung wird anhand der Figur 1 erläutert.

Innerhalb der zentralen Datenverarbeitungseinrichtung wird zunächst durch die Konzeptionseinheit (8) ein Trainingsplan konzipiert, der aus einer oder mehreren Einzelübungen besteht. Dabei werden Trainingsvorgaben und zurückliegende Trainingsergebnisse aus Datenbanken (5) (6) berücksichtigt. Dieser Trainingsplan wird mittels einer Schnittstelleneinrichtung (9) an eine bestimmte von mehreren möglichen im System integrierten mobilen Einheiten (11) übertragen. Die mobile Einheit führt ein bestimmter Trainierender mit sich. Eine solche mobile Einheit kann durch einen Handcomputer mit Stifteingabe (PDA, Personal Digital Assistant), oder einen ähnlich einer Armbanduhr am Handgelenk getragenen Kleinstcomputer ausgeführt sein. Die Übertragung des Trainingsplans von der Schnittstelle (9) zu einer mobilen Einheit (11) kann mittels Funk (10) erfolgen. Das System unterstützt gleichzeitig mehrere der mobilen Einheiten.

Der Trainierende führt ein Training nach Maßgabe des an ihn übermittelten Trainingsplanes durch, und gibt die dabei erreichten Trainingsresultate in die mobile Einheit ein. Die Trainingsresultate werden über die Schnittstelle (9) an die Auswertungseinrichtung (7) übertragen, wo sie entsprechend verarbeitet und in einer Datenbank (5) abgespeichert werden.

Der Trainer hat mittels einer ortsfesten Visualisierungs-/Eingabeeinheit (3) Zugriff auf die Datenbanken der Trainingsdaten (5) und Trainingsvorgaben (6), etwa um Einfluss auf den zukünftigen Trainingsablauf zu nehmen. Alternativ kann dies per Funk (2) mittels einer mobilen Einheit (1) über die Schnittstelle (4) erfolgen.

Durch das in der Erfindung beschriebene Trainingssystem kann für einen Trainierenden maschinell ein ständig an seinen Leistungsstand angepasster Trainingsplan erstellt werden. Dabei können die bei zurückliegenden Übungen erzielten Ergebnisse geeignet berücksichtigt werden.

## Patentansprüche

1. System zur Anleitung von Trainierenden,
**dadurch gekennzeichnet, dass** das System aus
• einer zentralen Einrichtung mit einer Trainingsdatenbank (5), einer Trainingsvorgabendatenbank (6), einer Auswertungseinrichtung (7), einer Konzeptionseinrichtung (8), und einer Schnittstelleneinrichtung (9), sowie
• mobilen Einheiten (11), die jeweils von den Trainierenden mitgeführt werden, um die Trainingspläne anzuzeigen und die erzielten Trainingsergebnisse einzugeben,
besteht.

2. System zur Anleitung von Trainierenden nach Schutzanspruch 1,
**dadurch gekennzeichnet, dass** das System
• über mindestens einen Monitor verfügt, mit dem Trainingsvorgaben und Trainingsregeln angezeigt werden, und
• über mindestens eine Einrichtung zur manuellen Eingabe verfügt, mit der Trainingsvorgaben und Trainingsregeln verändert oder ergänzt werden können.

3. System zur Anleitung von Trainierenden nach Schutzanspruch 1,
**dadurch gekennzeichnet, dass** das System
• über mindestens eine mobile Einheit (1) verfügt, mit dem Trainingsvorgaben und Trainingsregeln angezeigt sowie verändert oder ergänzt werden können.
